# EUROPEAN PATENT APPLICATION

(11) **EP 3 031 319 A1**
(43) Date of publication of application: **15.06.2016**
(21) Application number: 14196872.7
(22) Date of filing: 09.12.2014
(51) Int. Cl.: A01K 61/00

(54) **Aquaculture system with rigid structure**

(71) Applicant: NV Bekaert SA, 8550 Zwevegem (BE)
(72) Inventor: Suazo Luengo, Alejandro, Talcahuano (CL); Paredes, Montecinos, Hector, Talcahuano (CL)
(74) Representative: Messely, Marc

(57) **Abstract**

An aquaculture system (10) comprising:
a metallic aquaculture net (12) in the form of an open basket having an opening, the net (12) including side walls (13) and a bottom (14), said side walls (13) arranged to form an upper periphery of the opening of said aquaculture net (12) and a lower periphery connected to the bottom (14) of said aquaculture net (12),
flotation means (16) associated with the upper periphery of said aquaculture net (12),
shape-stabilizing means (18) connected to the lower periphery of said aquaculture net (12) such that the bottom (14) of the aquaculture net (12) is stretched and the shape of the aquaculture net (12) is stabilized,
suspension means (19) connecting the flotation means (16) with the shape-stabilizing means (18), wherein
the suspension means (19) is arranged for suspending the shape-stabilizing means (18) from the flotation means (16) such that the weight of the bottom (14) of the aquaculture net (12) is at least partially transmitted to the flotation means (16).

## Description

### Technical Field

The invention relates to an aquaculture system with shape-stabilizing means.

### Background Art

Aquaculture nets or fish-farming nets are used to raise aquatic life such as fish. The aquaculture net keeps the aquatic life controlled and contained inside the net. Aquaculture nets may be portable and displaceable from one location to another. Traditionally, the nets are made by nylon ropes or high density polyester ropes such as Dyneema®. A floatation system is needed to suspend the aquaculture net in the water together with weight means applied at the bottom of the net to position the net in place. The floatation system and/or the weight means are normally fastened to the ocean floor.

WO2008/134842A1 discloses an improved aquaculture system. It is provided an aquaculture system having flotation means adapted to suspend an aquaculture nets and weight means operatively connected to the aquaculture nets about its lower periphery. It is further disclosed that connection means adapted to connect the weight means to the flotation means such that the connection means maintains the aquaculture net in a predetermined configuration. The weight system therein may be in the form of articulating sections or it may be a flexible collar filled with a suitable weighting substance and desirably the weight is sufficiently rigid to hold its shape when anchoring forces are applied.

The solution by introducing weight system at lower periphery to maintain the shape of nets is intended for aquaculture net having relatively low weight. On the other hand, metallic aquaculture nets, which are quite heavier, are desirable to protect the aquatic life inside the net against predators such as sharks, seals, sea lions and piranhas. An example of a typical dimension of an aquaculture net is 30m x 30m x 15m, the last dimension being the depth of the net inside the water and the first two dimensions being the width and length of the net at the water surface. As a matter of example only, a net made of galvanized steel wire and of the above-mentioned dimensions has a weight above 4 metric Tonnes. The shape of such a heavy metallic aquaculture net in marine environment is also changed due to currents, tides, turbulence of swimming fish and the bottom weight.

The weight system disclosed by WO2008/134842A1 is not suitable for such a metallic aquaculture net to maintain its shape since the weight of the metallic aquaculture net itself is already quite heavy and creates severe abrasions between the metallic contacts.

### Disclosure of Invention

It is an object of the present invention to provide an improved metallic aquaculture system with rigid structure.

It is a further object of this invention to provide a chain link woven mesh net with stabilized net shape and prolonged life time.

According to the present invention, there is provided an aquaculture system comprising a metallic aquaculture net in the form of an open basket having an opening. The aquaculture net includes side walls and a bottom. The side walls are arranged to form an upper periphery of the opening of said aquaculture net and a lower periphery connected to the bottom of said aquaculture net. The aquaculture system further comprises flotation means associated with the upper periphery of said aquaculture net, shape-stabilizing means connected to the lower periphery of said aquaculture net such that the bottom of the aquaculture net is stretched and the shape of the aquaculture net is stabilized, and suspension means connecting the flotation means with shape-stabilizing means. The suspension means is arranged for suspending the shape-stabilizing means from the flotation means such that the weight of the bottom of the aquaculture net is at least partially transmitted to the flotation means.

The present invention is related to metallic aquaculture net which has a heavy bottom. Therefore, the application of an addition weight as taught by WO2008/134842A1 is not desirable. There is no need to put additional weight to sink the bottom. Instead, a shape-stabilizing means is applied to main the shape of the metallic aquaculture net. The shape-stabilizing means is connected to the lower periphery of said aquaculture net and differs from weight means of WO2008/134842A1 in that i) no additional weight substance is added to the means for the purpose of making it heavier, and ii) the bottom of the aquaculture net of the present invention is stretched by the application of shape-stabilizing means. In this way, the bottom of the aquaculture net of the present invention is quite flat and the volume change of the aquaculture net is limited. On the other hand, the stretched bottom is apt to a homogeneous distribution of abrasions due to the contacts between the metallic wires. In addition, due to the stretched bottom, the bottom weight of the metallic aquaculture net is at least partially transmitted to the shape-stabilizing means. Therefore, if the shape-stabilizing means is arranged to be suspended from the flotation means via the suspension means, the weight of the bottom of the aquaculture net is at least partially transmitted to the flotation means. This would decrease the load at the upper part of the net and in particularly in top perimeter and thus increase the life time of the aquaculture net.

The metallic aquaculture net according to the present invention can be made from any suitable metallic materials, like brass or alloys. The metallic aquaculture net according to the present invention is preferably made from chain-linked steel wire meshes. This is a fence of steel wires woven into a diamond pattern. The meshes have a dimension that is smaller than the dimension of the fish. Each steel wire is preformed by bending so that it exhibits a wavy pattern with maxima and minima. The maxima of a steel wire interlock with the minima of a neighbouring wire to form the patterns of a series of diamonds. Aquaculture nets of the chain-linked fence type have proven to be successful to control the aquatic life and to protect against predators.

The wire meshes of the side walls of the aquaculture net may have a parallel chain-link direction or perpendicular chain-link direction with respect to the bottom of the net. The chain-link direction herein refers to the direction along which adjacent two chains are linked and which follows the extension direction of elongated steel wire (or parallel to tangent of maxima and minima of wavy pattern). The chain-linked steel wire meshes may have a chain-link direction parallel to the bottom of the aquaculture net so that the chain-linked steel wire mesh of a side wall is flexible in the direction perpendicular to the bottom of the aquaculture net. This configuration allows significantly compacting, mainly for transportation, the net along the direction perpendicular to the chain-link direction. More preferably, the chain-linked steel wire meshes of the side walls have a chain-link direction perpendicular to the bottom of the aquaculture net. It has been found that this configuration results in a more stable aquaculture system and has less fouling when being suspended in the sea for a long life. The wire meshes within a side wall can have several parts (e.g. upper, intermediate and lower parts) and be joined together by ropes or spirals. Although the wire meshes are rigid along the chain-link direction, the chain-linked steel wire meshes within a side wall are flexible or foldable at the connections of the wire meshes. Therefore, whether the wire meshes of the side walls of the aquaculture net have chain-link direction parallel or perpendicular to the bottom of the net, it is possible to lift and compact the aquaculture net from bottom, e.g. by means of suspension means, for further transportation of the fish or cleaning the bottom.

The aquaculture net according to the present invention has length-by-width-by-depth dimensions which are greater than 1m x 1m x 1m, e.g. greater than 10m x 10m x 5m. Due to its metallic character, the aquaculture net as such is quite heavy. On the other hand, due to the heavy bottom, the shape and thus the volume of the aquaculture net could be changed. The shape-stabilizing means is applied to maintain the shape of the aquaculture net. As an example, the shape-stabilizing means is a rigid frame or ring. The rigid frame may be made from one or multiple pieces of tubes, H beams, or other elongated elements. The rigid ring may be made from one or multiple pieces of bent tubes, bent H beams, or other bent elongated elements. The tubes may have circular, square or rectangular cross-section. To retain the rigid property of the ring frame, the multiple pieces of tubes are firmly connected. For instance, the tubes can be welded. Preferably, the steel tubes or the ring frame pieces are assembled by means of bolts, which can be put through pipes and elbows, in order to avoid fatigue failures. The tubes, H beams, or other elongated elements may be made by any kind of materials which can provide required stiffness. Preferably, the tubes, H beams, or other elongated elements are made of metallic materials, e.g. steel or brass. The material in the cross-section of the tubes, H beams, or other elongated elements has an area in the range of 10 to 1000 mm², preferably in the range of 20 to 500 mm², more preferably in the range of 30 to 300 mm², and most preferably in the range of 50 to 200 mm². As an example, the ring frame is made from steel tubes having an outer diameter in the range of 10 mm to 80 mm, such as 40 mm or 50 mm. The thickness of the steel tubes may vary from 0.1 mm to 2 mm, e.g. from 0.2 mm to 1 mm.

As an example, the upper periphery of the opening of said aquaculture net is attached to a flotation means which has a circular shape, thus the upper periphery of the opening of the aquaculture net is in the shape of circular. Preferably, the bottom of the aquaculture net is in the shape of square, hexagonal or polygonal. Thus, the load can be relatively homogeneously distributed within the bottom and the volume of aquaculture net is maximized based on the same surface area.

The shape-stabilizing means may be connected to the lower periphery of said aquaculture net by wrapping ropes around the shape-stabilizing means and the lower periphery of said aquaculture net such that the bottom of said aquaculture is stretched. The wrapping ropes can be made of e.g. polypropylene, nylon, polyester or yarns of high modulus fibers. The suspension means can be ropes of the same material as the wrapping ropes or made from metal e.g. steel. Alternatively, the suspension means can be flexible chains, in particular metallic chains, e.g. made from galvanized steel. Preferably, multiple suspension means are connected to the shape-stabilizing means at the locations equally spaced along the shape-stabilizing means. More preferably, the multiple suspension means are also connected to the flotation means at the locations equally spaced along the flotation means. Therefore, the bottom weight of the aquaculture net can be substantially homogeneously transmitted to the flotation means via the suspension means and the stress at the top of the aquaculture net is reduced.

### Brief Description of Figures in the Drawings

The objects and advantages of the invention will be fully understood from the following more detailed description given by way of example with reference to the accompanying drawing in which :
Figure 1 shows a schematic view of an aquaculture system according to the invention.
Figure 2 (a), (b) respectively shows a piece of side wall of the aquaculture net suspended to the flotation means; and figure 2(c) shows a connection of two pieces of wire meshes.
Figure 3 shows a schematic view of the aquaculture system having a circular shape-stabilizing means. Figure 3 (a) shows the aquaculture system in its fully deployed form, figure 3 (b) shows the aquaculture system in its semi-compacted form, and figure 3 (c) shows the aquaculture system in its fully compacted form.
Figure 4 shows a schematic view of the aquaculture system having a rectangular shape-stabilizing means. Figure 4 (a) shows the aquaculture system in its fully deployed form, figure 4 (b) shows the aquaculture system in its semi-compacted form, and figure 4 (c) shows the aquaculture system in its fully compacted form.

### Mode(s) for Carrying Out the Invention

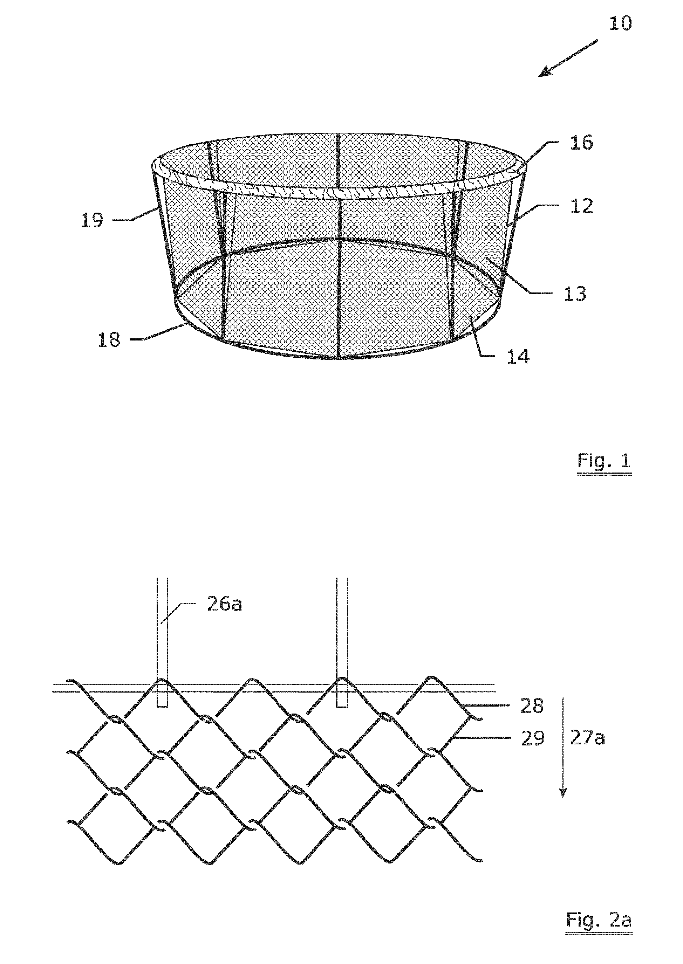

Figure 1 shows a schematic view of an example of an aquaculture system according to the present invention. The aquaculture system 10 has an aquaculture net 12. The aquaculture net 12 is made from chain-linked metallic wire meshes, e.g. steel wire meshes. The steel wire may have a corrosion resistant coating or a coating with anti-fouling property, e.g. copper-nickel cladded layer. The coated steel wire has a diameter in the range of 0.5 mm to 5 mm. e.g. from 1 mm to 3 mm. The aquaculture net 12 comprises side walls 13 and bottom 14.

Figure 1 illustrates an embodiment of a circular raft 16 as flotation means for an aquaculture net 12 as described by the present invention. The circular raft 16 can be made from several HDPE tubes joined together by means of brackets. The aquaculture net 12 can be directly connected to the rafts by means of ropes or wires. The bottom 14 of the aquaculture net 12 may still have the shape of square, rectangle or polygonal whereby the upper side takes a form close to a circle.

A ring 18 used as shape-stabilizing means is connected with the bottom 14 of the aquaculture net by e.g. wrapping polyester ropes (not shown). The bottom 14 is stretched in particular when the polyester ropes are fastened. The ring 18 is made by hollow steel tubes with a diameter of 40 mm and thickness of 0.5 mm. In addition, the aquaculture system 10 further comprises steel chains 19. Each steel chain 19 is connected with the ring 18 at one end and is connected with the raft 16 at the other end. The connection points are equally spaced along the raft 16 and the ring 18 respectively. The steel chains 19 are arranged to suspend the attached ring 18 from the raft 16.

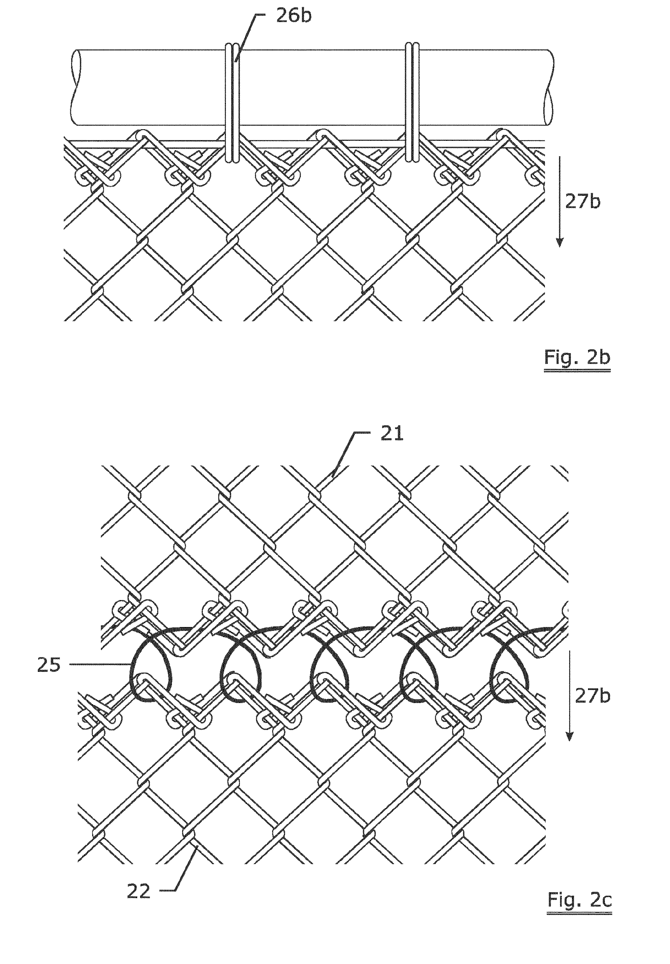

Figure 2 (a), (b) shows respectively a piece of side wall 13 of the aquaculture net suspended to the flotation means. As one example, the wire mesh has a chain-link direction substantially parallel to the bottom of the net, as shown in figure 2 (a). As another example, the wire mesh has a chain-link direction perpendicular to the bottom of the net, as shown in figure 2 (b). The top of the aquaculture net is connected to the floating raft 26a, 26b by means ropes and wires for upholding the wire meshes of the chain-link fence. The wire meshes of the aquaculture net are relatively rigid along the chain-link direction within a same piece of mesh made from continuous wires. When the wire mesh has a chain-link direction perpendicular to the bottom of the net, the meshes are divided into parts from top to bottom (e.g. an upper part and a lower part) and are connected by spirals 25, as shown in figure 2(c). The spiral 25 can be a spring wire has the same composition of the wires of the meshes. This configuration makes it possible to compact or fold the aquaculture net, mainly for transportation or cleaning, in the direction perpendicular to the bottom of the net (as shown by the arrow 27a in figure 2(a) and by arrow 27b in figure 2 (b) and (c)).

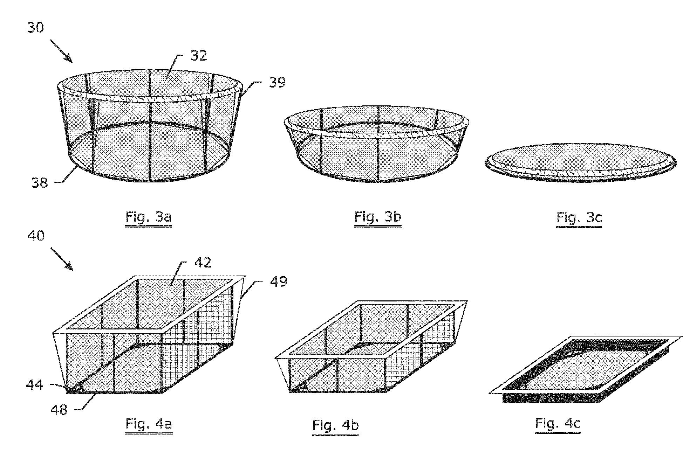

Figure 3 (a) illustrates an aquaculture system 30 having a circular ring frame 38 on the fish farming site. Figure 4 (a) illustrates an aquaculture system 40 having a rectangular frame 48 as a shape-stabilizing means. When the frame 48 is in the shape of rectangular, as shown in figure 4 (a), additional rigid elements, e.g. steel bars 44, can be applied at the corner to connect two adjacent sides of the rectangular frame to make it stable. The aquaculture system 30, 40 as respectively shown in figure 3 (a) and figure 4 (a) is (almost) fully deployed and reaches its maximum volume to breed fish.

As shown in figure 3 (b) and figure 4 (b), the steel chains 39,49 can be operatively used to lift the aquaculture net 32,42 to certain depth level in the water for cleaning the net or having a treatment for the fish. As one example, the chain-link direction of wire meshes is perpendicular to the bottom of the net, the meshes can be folded along the connection spirals, as illustrated in figure 2 (c). Also, the aquaculture system 30,40 can be compacted in a great extent, in particular when the chain-link direction of the wire meshes are parallel to the bottom of the net, to significantly reduce its volume. The compacted aquaculture system as shown in figure 3 (c) and figure 4 (c) can be transported to another fishing location e.g. by boats.

## Claims

1. An aquaculture system comprising:
a metallic aquaculture net in the form of an open basket having an opening,
the net including side walls and a bottom, said side walls arranged to form an upper periphery of the opening of said aquaculture net and a lower periphery connected to the bottom of said aquaculture net,
flotation means associated with the upper periphery of said aquaculture net,
shape-stabilizing means connected to the lower periphery of said aquaculture net such that the bottom of the aquaculture net is stretched and the shape of the aquaculture net is stabilized,
suspension means connecting the flotation means with the shape-stabilizing means, wherein
the suspension means is arranged for suspending the shape-stabilizing means from the flotation means such that the weight of the bottom of the aquaculture net is at least partially transmitted to the flotation means.

2. An aquaculture system according to claim 1, wherein the metallic aquaculture net are made from chain-linked steel wire meshes.

3. An aquaculture system according to claim 2, wherein the chain-linked steel wire meshes have a chain link direction parallel or perpendicular to the bottom of the aquaculture net.

4. An aquaculture system according to any one of the preceding claims, wherein the aquaculture net has length-by-width-by-depth dimensions greater than 1m x1mx1m.

5. An aquaculture system according to any one of the preceding claims, wherein the shape-stabilizing means is a rigid frame.

6. An aquaculture system according to claim 5, wherein the rigid ring is made from one or multiple pieces of tubes, H beams, or other elongated elements.

7. An aquaculture system according to claim 6, wherein the multiple pieces of tubes, H beams, or other elongated elements are connected by bolts.

8. An aquaculture system according to claim 6 or 7, wherein the tubes, H beams, or other elongated elements are made of metallic materials, e.g. steel or brass.

9. An aquaculture system according to any one of claims 6 to 8, wherein the material in the cross-section of the tubes, H beams, or other elongated has an area in the range of 10 to 1000 mm².

10. An aquaculture system according to any one of the preceding claims, wherein the upper periphery of the opening of said aquaculture net is in the shape of circular.

11. An aquaculture system according to any one of the preceding claims, wherein the bottom of the aquaculture net is in the shape of square, hexagonal or polygonal.

12. An aquaculture system according to any one of the preceding claims, wherein the shape-stabilizing means is connected to the lower periphery of said aquaculture net by wrapping ropes around the shape-stabilizing means and the lower periphery of said aquaculture net such that the bottom of said aquaculture net is stretched.

13. An aquaculture system according to claim 12, wherein the wrapping ropes are made of polypropylene, nylon, polyester or yarns of high modulus fibers.

14. An aquaculture system according to any one of the preceding claims, wherein the suspension means is ropes or chains, e.g. metallic ropes or chains.

15. An aquaculture system according to any one of the preceding claims, wherein the multiple suspension means are connected to the shape-stabilizing means at the locations equally spaced along the shape-stabilizing means and are connected to the flotation means at the locations equally spaced along the flotation means.
